# EUROPÄISCHE PATENTSCHRIFT

(11) **EP 0 605 364 B1**
(45) Veröffentlichungstag und Bekanntmachung des Hinweises auf die Patenterteilung: **15.07.1998**
(21) Anmeldenummer: 93810898.2
(22) Anmeldetag: 22.12.1993
(51) Int. Cl.: F16L 55/18, F16L 55/16

(54) **Vorrichtung und Verfahren vorzugsweise zum Instandstellen eines Hausanschlussrohres**
Device and method especially for the repair of a lateral
Dispositif et procédé notamment pour la mise en état d'un branchement latéral

(30) Priorität: 01.01.1993 CH 1/93
(43) Veröffentlichungstag der Anmeldung: 06.07.1994
(73) Patentinhaber: Granella, Bruno, CH-5200 Brugg (CH); HYDROSTRESS AG, CH-8330 Pfäffikon (CH)
(72) Erfinder: Granella, Bruno, CH-5200 Brugg (CH)
(74) Vertreter: Luchs, Willi

(56) Entgegenhaltungen:
- WO-A-92/01889
- US-A- 4 029 428
- US-A- 4 245 970

## Beschreibung

Die Erfindung betrifft eine Vorrichtung, vorzugsweise zum Instandstellen eines Hausanschlussrohres, mit einem Fräskopf, der am vorderen Ende einer flexiblen Welle befestigt ist, sowie ein Verfahren.

Bei einer gattungsmässigen Vorrichtung gemäss der Druckschrift US-A-4,029,428 bzw. der US-A-4,245,970 ist am vorderen Ende einer flexiblen Welle ein zylindrischer Fräskopf vorgesehen, welcher an der vorderen Stirnseite mit Schneidzähnen sowie einem zentralen Bohrer versehen ist. Hinter diesem Fräskopf sind zu seiner Zentrierung im zu erneuernden Rohr ballförmige Führungsscheiben an der flexiblen Welle angeordnet. Der Fräskopf, der annähernd einen Durchmesser wie derjenige des Rohres auf der Innenseite aufweist, kann nur sehr umständlich durch ein bestehendes Rohr geschoben werden, insbesondere dann, wenn das Hausanschlussrohr abgewinkelt ist. Ausserdem ist auch die Führung des Fräskopfes während dem Durchfräsen ungcnügend ausgebildet, so dass hierbei die Drehachse des Fräskopfes zu derjenigen des Rohres wegdriften kann. Der Vorschub des Fräskopfes muss über die flexible Welle erfolgen, wodurch eine nur sehr beschränkte Vorschubkraft ermöglicht ist.

Eine Vorrichtung zum Auftrennen eines Rohres nach der Druckschrift WO-A-92/01889 ist derart ausgebildet, dass deren Fräswerkzeug einerseits eine Bewegung in radialer Richtung und andererseits cine am Innenumfang des Rohres entlang verlaufende kreisförmige Vorschubbewegung ausführt. Es ist aber hierbei nicht vorgesehen, dass das Fräswerkzeug in Achsrichtung des Rohres verschiebbar geführt ist. Es kann somit kein Durchbruch zwischen einem Hausanschlussrohr und einem Kanalrohr bewerkstelligen. Ausserdem ist die Vorrichtung mit Aussenmassen versehen, welche annähernd dem Rohr-Innendurchmesser entsprechen. Dadurch kann dieselbe nicht durch ein Rohr eingeführt werden, welches abgewinkelt ist.

Bei einem bekannten Verfahren nach der DE-A1 39 11 267 wird in den sanierten Abwasserkanal ein steuerbarer, räumlich bewegbarer Fräskopf eingeführt. Vom Innenraum eines im Abwasserkanal ausgehärteten Kunststoffschlauches wird dieser mittels des Fräskopfes im Bereich des Hausanschlusses entsprechend seinem Aussendurchmesser ausgefräst. Der Fräsvorgang wird dabei mit Hilfe einer ebenfalls in den Kunststoffschlauch eingeführten Fernsehkamera von aussen gesteuert, wobei der Hausanschluss aufgrund einer angeblichen Auswölbung des mit einem Kunststoffschlauch sanierten Abwasserkanals festgestellt werden könne. Bei den aber weit häufiger zum Sanieren verwendeten Betonrohren kann mit einer Fernsehkamera ein von diesem Betonrohr zugedeckter Hausanschluss unmöglich festgestellt werden. Dies kann nur über ein umständliches Messverfahren ermittelt werden, wobei auch mit diesem Messverfahren der Hausanschluss des öfteren erst nach etlichen fehlgeschlagenen Versuchen gefunden wird, denn das neu eingesetzte Kanalisationsrohr ist normalerweise nicht mehr entsprechend den ursprünglich festgelegten Abmessungen im Boden verlegt. Auch der in dieser gattungsgemässen Druckschrift gezeigte Fräskopf eignet sich bestenfalls zum Durchfräsen von Kunststoffrohren, nicht aber zum Durchtrennen von massiven Betonwänden.

Aufgabe der vorliegenden Erfindung besteht demgegenüber darin, eine Vorrichtung und ein Verfahren nach der eingangs beschriebenen Gattung zu schaffen, mit welchem ein Anschluss eines Hausanschlussrohres oder dergleichen an ein saniertes Kanalisationsrohr ohne aufwendige Ortung des Hausanschlussrohres und auf effiziente und schnelle Art und Weise ermöglicht wird, und die Vorrichtung ein einwandfreies Fräsen auch von heutzutage für Kanalisationsrohre meistens verwendeten armierten Betonrohren zulässt.

Die Aufgabe ist erfindungsgemäss nach dem Kennzeichen des Anspruchs 1 gelöst.

Ein Verfahren gemäss der Erfindung ist in Anspruch 10 definiert. Dadurch erübrigt sich jegliche Ortung von Hausanschlussrohren in einem sanierten Kanalisationsrohr. Für ein saniertes Kanalisationsrohr, das mit den neuesten Verfahren durch Abfräsen des alten Rohres und gleichzeitiges Nachschieben eines neuen ohne Öffnung des Bodens erzielt wird, sind etliche solcher in dieses Kanalisationsrohr mündende Hausanschlüsse wieder herzustellen. Mit dem erfindungsgemässen Verfahren wird gegenüber den bekannten Verfahren erheblich an Arbeitszeit eingespart und überdies kann gleichzeitig noch das Hausanschlussrohr selber begutachtet und gegebenenfalls gesäubert und saniert werden.

Der Fräskopf wird vorteilhaft ausserhalb des Hausanschlussrohres über eine mit ihm verbundene und durch das Hausanschlussrohr geführte flexible Welle gesteuert und angetrieben.

Der Zustand dieses Hausanschlussrohres wird mit Vorteil vor dem Wiederherstellen mittels einer in das Hausanschlussrohr einführbaren Fernsehkamera ermittelt. Im Anschluss daran kann es in seinem vordersten Bereich vor dem Wiederherstellen mittels Injektion von Zement oder ähnlichem verfestigt werden, damit einerseits bei dem nachfolgenden Fräsvorgang der Fräskopf bis zum Durchstich in das Kanalisationsrohr besser geführt und andererseits ist nach dem Fräsen die Anschlussstelle des Hausanschlussrohres mit Beton umgeben und somit bereits wieder im Betriebszustand.

Der Fräskopf lässt sich beispielsweise von einem Schacht aus problemlos in das Hausanschlussrohr einführen und bis zu der in das sanierte Kanalisationsrohr führende und dort zugefüllte Einmündung vorschieben. Darauffolgend wird von aussen her die Befestigungseinrichtung angesteuert und damit der mit ihm verbundene Fräskopf radial eintellbar zentriert und überdies darin befestigt. Mit der vorteilhaft innerhalb der Befestigungseinrichtung angeordneten Vorschubeinrichtung kann infolgedessen das an dem Fräskopf sich drehende Schneidrad vorgeschoben und die Öffnung zum Kanalisationsrohr wieder hergestellt werden.

Ein Ausführungsbeispiel sowie weitere Vorteile der Erfindung sind nachfolgend anhand der Zeichnung näher erläutert. Es zeigt:
- Fig. 1: einen Längsschnitt einer erfindungsgemässen Vorrichtung, wobei deren Befestigungs- und Vorschubeinrichtung im Halbschnitt gezeigt sind,
- Fig.2: einen schematischen Querschnitt des Fräskopfes der Vorrichtung nach Fig.1,
- Fig.3: einen schematischen Querschnitt der Befestigungseinrichtung der Vorrichtung nach Fig.1.

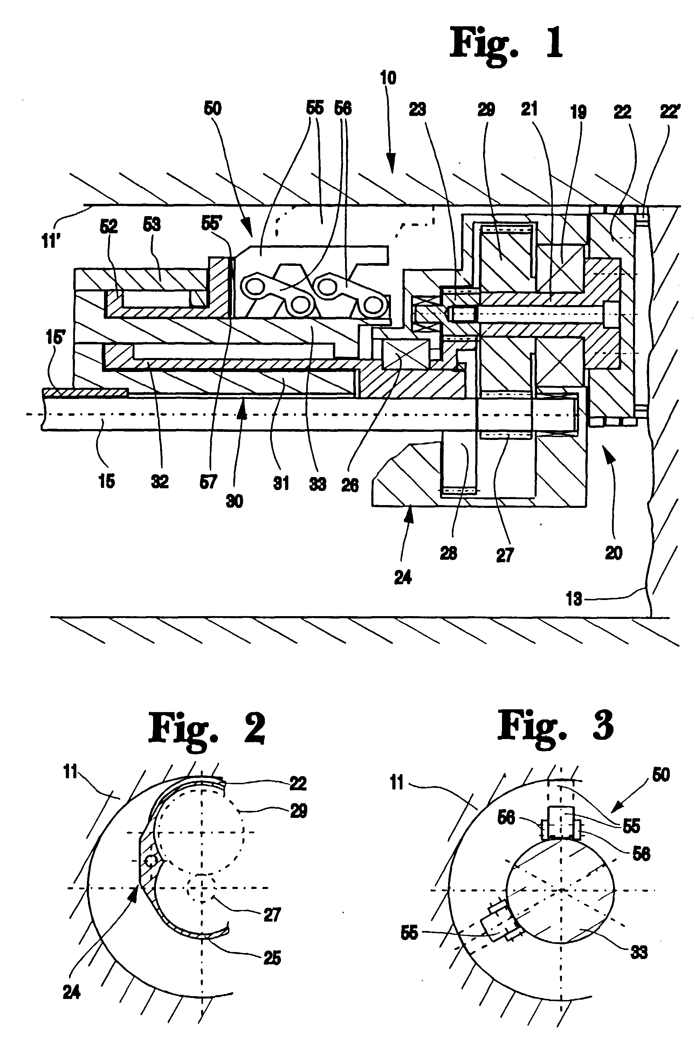

Die in Fig.1 gezeigte erfindungsgemässe Vorrichtung 10 besteht aus einer flexiblen Welle 15, einem an deren Ende befestigten Fräskopf 20, einer letzteren drehbar lagernde Vorschubeinrichtung 30 sowie aus einer von dieser gehaltenen Befestigungseinrichtung 50. Die als hydraulische Kolben/Zylinder-Einheit 31, 32, 33 vorgesehene Vorschubeinrichtung 30 bildet dabei quasi das Kernstück dieser Vorrichtung 10, denn zum einen wird von ihr die sie umgebende Befestigungseinrichtung 50 gehalten und zum anderen ist an deren ringförmigen Kolben 32 der gesamte Fräskopf 20 drehbar gehalten. In der präsentierten Stellung befindet sich dieser Kolben 32 in eingefahrenem Zustand und seine maximale Hublänge entspricht dann dem möglichen Vorschub der Vorrichtung 10 insgesamt. Die Welle 15 ist drehbar vom Kolben 32 gehalten und besteht dabei aus einer drehbaren Stahlsaite und einer diese umschliessende Hülle 15', die an ihren Enden fixiert sein muss, um die Führung der Welle 15 zu gewährleisten. Dadurch ist eine genügende Stabilität der Welle erzielt worden, um die Vorrichtung 10 sicher bis zur verstopften Mündung des Rohres vorzustossen. An dem inneren Zylinder 31 der Einheit ist dabei diese Hülse 15' befestigt und im übrigen ist der Kolben 32 zwischen diesen Zylinder 31 und dem äusseren Zylinder 33 abdichtend geführt.

Die Befestigungseinrichtung 50 besteht aus einer hydraulischen Kolben/Zylinder-Einheit 52, 53, drei von letzteren radial verstellbaren und jeweils um 120° versetzten Stützelementen 55 sowie aus diese gelenkig lagernden Verbindungshebeln 56. Die Stützelemente 55 sind jeweils an ihrer einen Stirnseite 55' in einer radialen Führung 57, bspw. einer Schwalbenschwanzführung, am ringförmigen Kolben 52 gleitend gehalten und zudem von den ihr zwei zugeordneten Verbindungshebeln 56 achsparallel zum Hausanschlussrohr 11 in annähernd radialer Richtung verstellbar. Sie werden von der Kolben/Zylinder-Einheit 52, 53 gleichermassen mit einer solchen Anpresskraft gegen die Innenwand 11' des Hausanschlussrohres 11 angedrückt, dass die Vorschubeinrichtung 30 auch bei Auftreten von während dem Fräsen wirkenden Axialkräften unverschiebbar und konzentrisch im Rohr 11 verbleibt. Die mit der Innenwand 11' in Kontakt gelangende Aussenseite der jeweiligen Stützelemente 55 hat vorzugsweise zwecks besserer Haftung eine aufgerauhte Oberfläche und ferner eine dem Radius der Innenwandung entsprechende Wölbung. Eine nicht näher gezeigte Leitung führt von dieser Kolben/Zylinder-Einheit 52, 53 wie auch von der Vorschubeinrichtung 30 durch das Rohr 11 zu einer aussen oder in einem vorgängigen Schacht positionierten Pumpe sowie einer Steuerung, mittels der diese Einheiten zweckentsprechend gesteuert werden können.

Der Fräskopf 20 ist wie bereits ausgeführt an der Vorderseite des Kolbens 32 drehbar gelagert und er umfasst einen Exzenterkopf 24 und ein exzentrisch an diesem in einem Wälzlager 19 gelagertes Schneidrad 22. Der Exzenterkopf 24 hat ein ovales Gehäuse 25, das mittels eines Lagers 26 exzentrisch am Kolben 32 drehbar gehalten und in ihm ein Getriebe integriert ist. Aus der durch die ringförmig ausgebildete Kolben/Zylinder-Einheit 32, 33 und in dieses Gehäuse 25 sich erstreckenden Welle 15 sind zwei mit ihr drehverbundene, hintereinander angeordnete Ritzel 27, 28 des Getriebes vorgesehen. Das kleinere Ritzel 27 ist mit einem im oberen Teil des Gehäuses 25 drehfest zur Antriebswelle 21 des Schneidrades 22 gelagertem Planetenrad 29 und das grössere Ritzel 28 ist mit einem kleineren Zahnrad 23 drehverbunden, welches auch im Gehäuse 25 gelagert ist und das mit ihr verbundene Schneidrad 22 antreibt. Wenn nun die Welle 15 über einen nicht näher dargestellten, ausserhalb des Hausanschlussrohres 11 befindlichen Antrieb gedreht wird, so wird einerseits das Zahnrad 23 und damit das Planetenrad 29 wie auch das Schneidrad 22 mit einer zur Welle 15 übersetzten Drehzahl in Rotation versetzt. Dadurch, dass das Planetenrad 29 schneller als das mit ihm drehverbundene Ritzel 27 rotiert, wird der Exzenterkopf 24 und das ihm zugehörige Gehäuse 25 zusätzlich um die Achse des Kolbens 32 und damit um diejenige des Rohres 11 gedreht. Infolgedessen fräst das in seinem Durchmesser etwas grösser als der Radius des Rohres 11 konzipierte Schneidrad 22 die gesamte Rohr-Stirnfläche 13 ab. Das als Werkzeug dienende auswechselbare Schneidrad 22 hat im übrigen umfangs- und stirnseitig diamantbestückte Schneidzähne 22', wie dies bei Betonfräswerkzeugen allgemein bekannt ist. Für denselben Fräskopf kann auch ein Schneidrad angeflanscht werden, das in seinem Durchmesser so gross ist, dass in dem aufgefrästen Bereich eine Durchmesservergrösserung des Rohres bewirkt wird, und ein dort nachträglich eingesetztes Rohrstück dann den gleichen Innendurchmesser wie das Hausanschlussrohr 11 aufweist.

Ferner kann mit einer separaten Leitung Wasser eingespritzt werden, um die vom Abfräsen entstehenden Materialien abzuschwemmen oder abzusaugen und zudem um das Schneidrad zu kühlen. Auch hierzu ergibt sich ein weiterer Vorteil, als die Vorrichtung 10 in seinem Querschnitt nicht den gesamten Rohrquerschnitt 11 ausfüllt und damit diese genannten Materialien problemlos abgeführt werden können.

Durch diese oben ausführlich erläuterte Anordnung der erfindungsgemässen Vorrichtung 10 ergibt sich ein weiterer entscheidender Vorteil in dem Sinne, als mit ihr die gesamte Stirnfläche 13 des Hausanschlussrohres 11 abgebaut werden kann, dass sie aber, bei eingefahrenen Stützelementen 55 vorausgesetzt, einen durch den Exzenterkopf 24 gebildeten Aussendurchmesser aufweist, der nur etwa 70% desjenigen vom Rohr 11 entspricht und zudem ist der Exzenterkopf 24 in seiner Breite durch dessen ovale Ausbildung noch schmäler als der genannte Aussendurchmesser. Dadurch kann diese Vorrichtung 10 auch in ein angewinkeltes Hausanschlussrohr 11 eingeführt werden, was sehr häufig der Fall ist. Auch die Längserstreckung ist bei dieser Vorrichtung optimal gelöst, denn es ist nebst den obgenannten D.urchmessern auch von Bedeutung, dass diese Vorrichtung nicht zu lange gebaut ist. Aufgrund dieser Vorteile hebt sich die erfindungsgemässe Vorrichtung 10 von dem gesamten Stand der Technik ab.

Die gewählte Konsstruktion für diese Vorrichtung 10 könnte selbstverständlich auch anders aussehen. So könnte beispielsweise der Antrieb für das Schneidrad auch direkt im Exzenterkopf integriert sein. Dies würde aber eine Vergrösserung seiner Dimensionierung bedeuten.

Im weiteren könnten anstelle dieser hydraulischen Verstellantriebe im Prinzip auch Zahnstangengetriebe oder dergleichen verwendet werden.

Die Stützelemente der Befestigungseinrichtung könnten im Prinzip auch einzeln radial nach aussen verschiebbar sein. Damit könnte sogar die Vorschubeinrichtung und die Welle exzentrisch im Hausanschlussrohr befestigt werden und es könnte dann das Schneidrad konzentrisch zu und direkt von der Welle angetrieben werden. Zur Offenbarung der Erfindung genügt jedoch die dargestellte Version.

Auch das Anwendungsgebiet dieser erfindungsgemässen Vorrichtung 10 erschöpft sich natürlich nicht in dem Wiederherstellen von Hausanschlussrohren oder Werkleitungsanschlüssen in Industriebetrieben, sie lässt sich beispielsweise auch nur zum Reinigen solcher Rohre bei Vorliegen von Verstopfungen oder sogar zum Herstellen von vorteilhaft nicht all zu langen Vollbohrungen oder anderen sinnvollen Verwendungen benützen. Unter dem Begriff Hausanschlussrohr sind ganz allgemein Anschlussrohre von Häusern (Gebäuden) aller Art, wie auch von Fabriken oder anderen Gewerbebaulichkeiten zu verstehen.

Fig. 2 zeigt den Exzenterkopf 24 in seinem Querschnitt. Damit ist nochmals das Verhältnis seiner Aussenabmessungen zum Durchmesser des Hausanschlussrohres 11 verdeutlicht und unter Beweis gestellt, dass sich diese Vorrichtung aufgrund seiner kompakten Bauweise in eingefahrenem Zustand durch stark abgewinkelte Hausanschlussrohre einführen lässt. Für solche Haus- oder Werkanschlussrohre werden im Allgemeinen normierte Durchmessergrössen von 150, 200 oder 250 Millimetern appliziert. Insbesondere bei denjenigen mit 250 mm kann entsprechenderweise auch ein gegenüber den kleineren Durchmessern grösserer Fräskopf vorgesehen werden, bei dem der vorzugsweise hydraulische Antrieb- wie oben bereits erläutert - anstelle des externen Wellenantriebes im Exzenterkopf oder hinter der Befestigungseinrichtung angeordnet sein könnte.

In Fig. 3 ist die von den Stützelementen 55 gebildete Dreipunktauflage im Hausanschlussrohr 11 dargestellt. Es ist dabei insbesondere ersichtlich, dass die drei Stützelemente in einem gleichmässigen Winkelabstand von 120° zueinander angeordnet sind. Damit ist eine ausreichende Befestigung der Vorrichtung 10 im Rohr gegeben. Es wäre jedoch nicht ausgeschlossen, nur zwei oder auch mehr als drei solcher Stützelemente vorzusehen.

Die Drehachse des Fräskopfes könnte im Prinzip auch gegenüber der Achse des Rohres um 45° abgewinkelt sein und zudem kann dieser Fräskopf mit der flexiblen Welle drehverbunden sein. Es wird durch Drehung dieser Welle um die Rohrachse bewirkt, dass das Schneidrad den gesamten Umfang der Rohr-Innenwandung abfräst. Die Vorschubeinrichtung könnte dabei derart ausgebildet sein, dass die mit dem Fräskopf verbundene und in der Vorrichtung längsgeführte Welle gleichfalls durch Längsbewegung den Fräskopf gegenüber der im Rohr fixierten Befestigungseinrichtung vorschiebt, anstelle einer in der Vorrichtung eingebauten Kolben/Zylinder-Einheit.

Um es noch einmal zusammenfassend festzuhalten, wird bei dem erfindungsgemässen Verfahren vorzugsweise vorerst der Zustand des Hausanschlussrohres 11 mit einer ins Rohr 11 einführbaren Fernsehkamera ermittelt, dann im vordersten Bereich von letzterem eine Zementemulsion injiziert und nach deren Verfestigung der Fräskopf 20 und die gesamte Vorrichtung 10 in der in Fig. 1 gezeigten Stellung bei eingefahrenen Stützelementen 55 und Kolben 32 durch Vorschieben der Welle 15 in das Hausanschlussrohr 11 eingeführt wird, wobei die Welle 15 zusammen mit den ebenfalls ausserhalb des Hausanschlussrohres angeschlossenen Hydraulikleitungen der Kolben/Zylinder-Einheiten 31, 32, 33, 52, 53 in einem wasserdichten Schlauch eingefasst sein kann. Wenn die Vorrichtung an der genannten Stelle angelangt ist, können die Stützelemente 55 zur Befestigung der Vorrichtung ausgefahren werden. Sodann wird der Drehantrieb der Welle 15 eingeschaltet und das Schneidrad 22 mit einem definierten Vorschub gegen die Stirnseite 13 des Rohres 11 bewegt. Wenn nach der gesamten Hublänge der Vorschubeinrichtung 30 der Durchbruch zum sanierten Kanalisationsrohr oder dergleichen noch nicht erfolgt ist, werden die Stützelemente 55 wieder gelöst und die Vorrichtung 10 kann nochmals um annähernd die Hublänge nachgeschoben werden. Dann kann das oben beschriebene Prozedere wiederholt werden. Nachdem der Rohranschluss ins Kanalisationsrohr wiederhergestellt ist, kann es erforderlich sein, dass das Rohr 11 in dem abgebauten Bereich je nach Zustand noch mit einem sogenannten Relining versehen werden muss, d.h., dass es in dem Bereich ausgebessert oder mit einem Rohreinsatz dicht gemacht wird.

## Patentansprüche

1. Vorrichtung, vorzugsweise zum Instandstellen eines Hausanschlussrohres, mit einem Fräskopf (20), der am vorderen Ende einer flexiblen Welle (15,15') befestigt ist, dadurch gekennzeichnet, dass dem Fräskopf (20) eine im abzubauenden Rohr (11) zentrierbare Befestigungs- (50) und Vorschubeinrichtung (30) zugeordnet ist und sich der Fräskopf (20) aus einem um die Mittenachse der Befestigungsvorrichtung (50) drehbaren Exzenterkopf (24) und aus einem in diesem drehgelagerten Schneidrad (22) zusammensetzt, wobei dieses Schneidrad (22) durch diesen Exzenterkopf (24) mit seiner Drehachse eine kreisförmige Bewegung im Rohr (11) ausführt.

2. Vorrichtung nach Anspruch 1, dadurch gekennzeichnet, dass die Befestigungseinrichtung (50) aus mindestens zwei radial einstellbarer Stützelemente (55) und einer letztere an die Innenwand des Rohres (11) andrückbaren hydraulischen Kolben/Zylinder-Einheit (52,53) besteht und mit diesen Stützelementen (55) der Fräskopf (20) zentrisch oder radial versetzt im abzubauenden Rohr (11) einstellbar ist.

3. Vorrichtung nach einem der Ansprüche 1 oder 2, dadurch gekennzeichnet, dass der Fräskopf (20) von der als hydraulische Kolben/Zylinder-Einheit (31,32,33) ausgebildeten Vorschubeinrichtung (30) längsverschiebbar im Rohr (11) geführt ist.

4. Vorrichtung nach Anspruch 3, dadurch gekennzeichnet, dass die Vorschubeinrichtung (30) innerhalb der Befestigungseinrichtung (50) angeordnet ist und an deren konzentrisch zum Hausanschlussrohr (11) verschiebbaren Kolben (32) der Exzenterkopf (24) des Fräskopfes (20) drehbar gelagert ist.

5. Vorrichtung nach Anspruch 3 oder 4. dadurch gekennzeichnet, dass sich die den Exzenterkopf (24) sowie das Schneidrad (22) des Fräskopfes (20) antreibende flexible Welle (15) durch das Hausanschlussrohr (11) und durch den Kolben (32) der Vorschubeinrichtung (30) erstreckt, von einem ausserhalb des Rohres (11) befindlichen Antrieb gedreht wird und vorzugsweise aus einer Stahlsaite und einer diese umschliessenden Hülle (15') besteht.

6. Vorrichtung nach einem der vorhergehenden Ansprüche, dadurch gekennzeichnet, dass der Exzenterkopf (24) und das Schneidrad (22) über je ein im ersteren befindlichen Getriebe antreibbar sind, wobei die Ritzel (27,28) dieser Getriebe mit der flexiblen Welle (15) verbunden sind.

7. Vorrichtung nach einem der vorhergehenden Ansprüche, dadurch gekennzeichnet, dass die flexible Welle (15) nur zum Verschieben der Vorrichtung (10) dient, in welcher ansonsten der Antrieb für den Fräskopf (20) eingebaut ist.

8. Vorrichtung nach einem der vorhergehenden Ansprüche, dadurch gekennzeichnet, dass der Durchmesser des Schneidrades (22) annähernd 50% und derjenige des Fräskopfes (20) insgesamt nicht grösser als etwa 70% des Durchmessers des abzubauenden Rohres (11) beträgt, damit die Vorrichtung (10) insgesamt durch das Hausanschlussrohr (11) geschoben werden kann, auch dann, wenn letzteres ein- oder mehrmals abgewinkelt ist.

9. Vorrichtung nach einem der Ansprüche 2 bis 8, dadurch gekennzeichnet, dass die Stützelemente (55) der Befestigungseinrichtung (50) unabhängig voneinander radial einstellbar sind und derart im Hausanschlussrohr verstellt werden, dass sich die Vorschubeinrichtung und die in ihr enthaltende Welle exzentrisch zum Rohr befestigt sind und das Schneidrad konzentrisch zur Welle unmittelbar von dieser antreibbar ist.

10. Verfahren vorzugsweise zum Instandstellen eines Hausanschlussrohres, mit einer Vorrichtung nach einem der Ansprüche 1 bis 9, dadurch gekennzeichnet, dass die Instandstellung mit dem in das Hausanschlussrohr (11) eingeführten und dieses im wesentlichen stirnseitig abbauenden Fräskopf (20) durchgeführt wird.

11. Verfahren nach Anspruch 10, dadurch gekennzeichnet, dass der Fräskopf (20) ausserhalb des Hausanschlussrohres (11) über die mit ihm verbundene und durch das Hausanschlussrohr (11) geführte flexible Welle (15,15') zumindest geschoben und vorzugsweise auch angetrieben wird.

12. Verfahren nach Anspruch 10 oder 11, dadurch gekennzeichnet, dass vor dem Wiederherstellen mittels einer in das Hausanschlussrohr (11) einführbaren Fernsehkamera der Zustand dieses Hausanschlussrohres (11) ermittelt wird.

13. Verfahren nach Anspruch 10, 11 oder 12, dadurch gekennzeichnet, dass das Hausanschlussrohr (11) in seinem vordersten Bereich, insbesondere stirnseitig, vor dem Wiederherstellen mittels Injektion von Zement oder ähnlichem verfestigt wird.

## Claims

1. Device, in particular to repair a house junction pipe, with a cutter head (20), which is fastened at the front end of a flexible shaft (15,15') characterized in that
the cutter head (20) has a feeding device (30) and a fastening mechanism (50), which can be centered in the pipe (11) to be worked, and the cutter head (20) comprising an eccentric head (24) rotatable about the center axis of the fastening mechanism (50) and a cutter wheel (22) rotatably beared on the eccentric head (24), whereby the cutter wheel (22) with its rotating axis is carrying out a circular rotation in the pipe (11) by the eccentric head (24).

2. Device according to claim 1, characterized in that the fastening mechanism (50) is consisting by means of at least two radially pivotable supporting elements (55) and a hydraulic piston-cylinder unit (52,53) pressing the supporting elements (55) against the inner wall of the pipe (11), and with these supporting elements (55) the cutter head (20) can be adjusted either central or radial displaced in the pipe (11).

3. Device according to claim 1 or 2, characterized in that the cutter head (20) is longitudinally movable guided in the pipe by the feeding device (30), which is provided as a hydraulic piston-cylinder unit (31,32,33).

4. Device according to claim 3, characterized in that the feeding device (30) is arranged inside the fastening mechanism (50) and at its concentric to the house junction pipe (11) movable piston (32) the eccentric head (24) of the cutter head (20) is rotatably mounted.

5. Device according to claim 3 or 4, characterized in that the flexible shaft (15) driving the eccentric head (24) as well as the cutter wheel (22) of the cutter head (20) is extending through the house junction pipe (11) and through the piston (32) of the feeding device (30), and further is driven by means of a motor placed outside the pipe (11), and the flexible shaft (15) preferably comprises a steel string and an envelope (15') enclosing the steel string.

6. Device according to any one of the preceding claims, characterized in that the eccentric head (24) and the cutter wheel (22) are driven by means of a gear drive, which is located in the eccentric head (24) and its pinion wheels (27,28) are connected to the flexible shaft (15).

7. Device according to any one of the preceding claims, characterized in that the flexible shaft (15) is particularly used for the movement of the device (10), in which the drive for the cutter head (20) is integrated.

8. Device according to any one of the preceding claims, characterized in that the diameter of the cutter wheel (22) is at about 50% and the one of the cutter head (20) is not greater than at about 70% of the diameter of the pipe (11) to be worked, so that the device (10) as a whole can be moved through the pipe (11), also in that case, if the latter is one or several times curved.

9. Device according to any one of the claims 2 to 8, characterized in that the supporting elements (55) of the fastening mechanism (50) are radial and independently from each other adjustable in such a way to the pipe (11), that the feeding device and the shaft in it are positioned eccentrically in the pipe (11) and the cutter wheel is concentrically mounted on the shaft and directly driven by the latter.

10. Method, in particular to repair a house junction pipe, with a device according to any one of the claims 1 to 9, characterized in that this repair is made by means of a cutter head (20), which is led in into the house junction pipe (11) and is working essentially with its front face.

11. Method according to claim 10, characterized in that the cutter head (20) is connected with the flexible shaft (15,15'), which is leading from the outside of the house junction pipe (11) through it and is pushing and preferably driving the cutter head (20).

12. Method according to claim 10 or 11, characterized in that prior to the repair, the condition of the house junction pipe (11) is determined by means of a television camera, which can be led in into the house junction pipe (11).

13. Method according to any one of the claims 10, 11 or 12, characterized in that prior to the repair, the house junction pipe (11) in its frontal area is solidified by means of injecting concrete or the like.

## Revendications

1. Dispositif, de préférence pour remettre en état un tuyau de raccordement d'immeuble, comportant une tête à fraiser (20) qui est fixée au bout avant d'un arbre (15, 15') flexible, caractérisé en ce qu'il est associé à la tête à fraiser (20) un dispositif (50) de fixation et un dispositif (30) d'avance pouvant être centrés dans le tuyau (11) à démonter et en ce que la tête à fraiser (20) est constituée d'une tête (24) excentrée tournant par rapport à l'axe médian du dispositif (50) de fixation et d'une roue (22) de coupe qui est montée tournante, cette roue (22) de coupe effectuant, dans cette tête (24) excentrée, un mouvement circulaire dans le tube (11) par son axe de rotation.

2. Dispositif suivant la revendication 1, caractérisé en ce que le dispositif (50) de fixation est constitué d'au moins deux éléments (55) d'appui pouvant être déplacés radialement et d'une unité (52, 53) piston/cylindre hydraulique pouvant presser les éléments d'appui sur la paroi intérieure du tube (11) et en ce que, par ces éléments (55) d'appui, la tête à fraiser (20) peut être déplacée dans le tuyau (11) à démonter de manière centrée ou de manière radialement décalée.

3. Dispositif suivant l'une des revendications 1 ou 2, caractérisé en ce que la tête à fraiser (20) est guidée de manière à coulisser dans le tuyau (11) par le dispositif (30) d'avance réalisé en unité (31, 32, 33) piston/cylindre hydraulique.

4. Dispositif suivant la revendication 3, caractérisé en ce que le dispositif (30) d'avance est monté à l'intérieur du dispositif (50) de fixation et en ce que la tête (24) excentrée de la tête à fraiser (20) est montée tournante sur le piston (32) du dispositif d'avance coulissant concentriquement au tuyau (11) de raccordement d'immeuble.

5. Dispositif suivant la revendication 3 ou 4, caractérisé en ce que l'arbre (15) flexible entraînant la tête (24) excentrée ainsi que la roue (22) de coupe de la tête à fraiser (20) s'étend par le tuyau (11) de raccordement d'immeuble et par le piston (32) du dispositif (30) d'avance, tourne par un dispositif d'entraînement se trouvant à l'extérieur du tuyau (11) et est constitué de préférence par une corde en acier et une gaine (15') qui l'entoure.

6. Dispositif suivant l'une des revendications précédentes, caractérisé en ce que la tête (24) excentrée et la roue (22) de coupe peuvent être entraînées chacune par l'intermédiaire d'une transmission se trouvant dans la tête (24) excentrée, les pignons (27, 28) de ces transmissions étant reliés à l'arbre (15) flexible.

7. Dispositif suivant l'une des revendications précédentes, caractérisé en ce que l'arbre (15) flexible ne sert qu'au déplacement du dispositif (20) dans lequel, par ailleurs, est monté le dispositif d'entraînement de la tête à fraiser (20).

8. Dispositif suivant l'une des revendications précédentes, caractérisé en ce que le diamètre de la roue (22) de coupe est égale à, à peu près, 50% du diamètre du tuyau (11) à démonter et en ce que le diamètre de la tête à fraiser (20) n'est pas dans l'ensemble supérieur à environ 70% du diamètre du tuyau (11) à démonter, afin que tout le dispositif (10) puisse être enfoncé dans le tuyau (11) de raccordement d'immeuble, même si ce tuyau de raccordement d'immeuble est coudé une fois ou plusieurs fois.

9. Dispositif suivant l'une des revendications 2 à 8, caractérisé en ce que les éléments (55) d'appui du dispositif (50) de fixation peuvent être réglés radialement indépendamment les uns des autres et sont déplacés dans le tuyau de raccordement d'immeuble de telle manière que le dispositif d'avance et l'arbre qui y est contenu sont fixés de manière excentrée par rapport au tuyau et que la roue de coupe peut être entraînée concentriquement à l'arbre, directement par lui.

10. Procédé, de préférence pour remettre en état un tuyau de raccordement d'immeuble, comportant un dispositif suivant l'une des revendications 1 à 9, caractérisé en ce que l'on effectue la remise en état par la tête à fraiser (20) introduite dans le tuyau (11) de raccordement d'immeuble et démontant ce tuyau de raccordement d'immeuble essentiellement du côté frontal.

11. Procédé suivant la revendication 10, caractérisé en ce que la tête à fraiser (20) est au moins poussée et de préférence aussi entraînée à l'extérieur du tuyau (11) de raccordement d'immeuble par l'intermédiaire de l'arbre (15, 15') flexible qui lui est relié et qui passe par le tuyau (11) de raccordement d'immeuble.

12. Procédé suivant la revendication 10 ou 11, caractérisé en ce que, avant la remise en état, on détermine l'état de ce tuyau (11) de raccordement d'immeuble au moyen d'une caméra de télévision pouvant être introduite dans le tuyau (11) de raccordement d'immeuble.

13. Procédé suivant la revendication 10, 11 ou 12, caractérisé en ce que le tuyau (11) de raccordement d'immeuble est, avant la remise en état, immobilisé dans sa zone la plus en avant, notamment du côté frontal, au moyen d'une injection de ciment ou analogue.
